# EUROPEAN PATENT APPLICATION

(11) **EP 4 837 836 A1**
(43) Date of publication of application: **11.11.2026**
(21) Application number: 26166517.8
(22) Date of filing: 20.03.2026
(51) Int. Cl.: B64C 13/28, B64C 13/10, B64C 13/46, B64C 13/50

(54) **COLLISION AVOIDANCE CUEING**

(30) Priority: 08.05.2025 US 202519203112
(71) Applicant: The Boeing Company, Arlington, VA 22202 (US)
(72) Inventor: IRWIN, Joseph George, III, Arlington, 22202 (US); KASHAWLIC, Bryan Edward, Arlington, 22202 (US); ARKEBAUER, Andrew Cunningham, Arlington, 22202 (US); TEREK, Justin Taylor, Arlington, 22202 (US)
(74) Representative: St Clair Jones, Gregory Arthur Langley

(57) **Abstract**

A flight control system may detect an aircraft flight regime. The flight control system may detect one or more objects in or near a flight path during a flight. The flight control system may apply one or more force cues to one or more active control inceptors in accordance with the aircraft flight regime and a relative location of each of the one or more objects. The flight control system may output, to an actuator associated with at least one of the one or more active control inceptors, a control signal in accordance with the one or more force cues. The one or more force cues include one or more of a detent, one or more soft stop limits, or one or more hard stop limits.

## Description

### FIELD

The present disclosure relates generally to aircraft controls and to flight control cueing limits.

### BACKGROUND

Aircraft flight control systems generally manage the orientation and trajectory of an aircraft along three primary axes: a longitudinal axis, a vertical axis, and a lateral axis. Rotation about the longitudinal axis corresponds to roll, rotation about the lateral axis corresponds to pitch, and rotation about the vertical axis corresponds to yaw. Helicopter flight control systems typically manage aircraft orientation and movement through adjustments in rotor blade pitch angles.

Primary flight control inputs may include cyclic, collective, and anti-torque (pedal) controls. The cyclic control may selectively alter the pitch angle of individual rotor blades as they rotate, thereby tilting a rotor disk to control helicopter pitch and roll. Collective control input may uniformly adjust pitch angles of all main rotor blades simultaneously, thereby increasing or decreasing lift and allowing the helicopter to climb or descend vertically. Anti-torque controls, such as tail rotor pedals, may adjust the pitch angle of tail rotor blades to provide yaw control and counteract torque generated by rotation of the main rotor. Some helicopters, such as a tandem rotor helicopter, use differential collective for pitch control and differential cyclic for yaw control with no anti-torque rotor while other helicopters, such as tiltrotor helicopters, use differential collective for roll control and differential cyclic for yaw control with no anti-torque rotor.

### SUMMARY

An embodiment of the present disclosure provides a method, comprising: detecting an aircraft flight regime; detecting one or more objects in or near a flight path during a flight; applying one or more force cues to one or more active control inceptors in accordance with the aircraft flight regime and a relative location of each of the one or more objects; and outputting, to an actuator associated with at least one of the one or more active control inceptors, a control signal in accordance with the one or more force cues, wherein the one or more force cues include one or more of a detent, one or more soft stop limits, or one or more hard stop limits.

Another embodiment of the present disclosure provides a flight control system, comprising: one or more memories; and one or more processors, coupled to the one or more memories, configured to: detect an aircraft flight regime; detect one or more objects in or near a flight path during a flight; apply one or more force cues to one or more active control inceptors in accordance with the aircraft flight regime and a relative location of the one or more objects; and output, to an actuator associated with at least one of the one or more active control inceptors, a control signal in accordance with the one or more force cues, wherein the one or more force cues include one or more of a detent, one or more soft stop limits, or one or more hard stop limits.

Yet a further embodiment of the present disclosure provides a (optionally non-transitory) computer-readable medium storing a set of instructions, the set of instructions comprising: one or more instructions that, when executed by one or more processors of a flight control system, cause the flight control system to: detect an aircraft flight regime; detect one or more objects in or near a flight path during a flight; apply one or more force cues to one or more active control inceptors in accordance with the aircraft flight regime and a relative location of the one or more objects; and output, to an actuator associated with at least one of the one or more active control inceptors, a control signal in accordance with the one or more force cues, wherein the one or more force cues include one or more of a detent, one or more soft stop limits, or one or more hard stop limits.

The features, functions, and advantages described herein can be achieved independently in various implementations or can be combined in other implementations, further details of which are shown in the drawings and described below.

### BRIEF DESCRIPTION OF THE DRAWINGS

Fig. 1 is a diagram of an example aircraft.
Fig. 2 is a diagram showing example components of a flight control system.
Fig. 3 is a flowchart of an example process associated with modifying flight control force cues.

### DETAILED DESCRIPTION

The following detailed description of example implementations refers to the accompanying drawings. The same reference numbers in different drawings identify the same or similar elements.

A flight regime is an operating state or condition of an aircraft and may be defined in accordance with factors such as aircraft altitude, airspeed, orientation, configuration of control surfaces, environmental conditions, aircraft performance parameters, or phases of flight such as takeoff, climb, cruise, descent, approach, nap-of-the-Earth, contour flight, low-level flight, aerial refueling, ship launch, recovery, or landing. Determination of a flight regime may involve analyzing sensor data received from aircraft sensor systems, including data indicative of airspeed, altitude, pitch angle, roll angle, yaw angle, acceleration, navigation position, or other flight parameters. The identified flight regime may be used by a flight control system for subsequent processing or operational functions. The flight control system may be configured to manage, control, or influence flight characteristics or flight behavior of the aircraft through actuation or adjustment of flight control surfaces, propulsion devices, or other controllable aircraft elements in accordance with the flight regime and pilot input.

Some aircraft may be equipped with obstacle detection and avoidance systems, which may allow the flight control system to identify, track, or detect objects located in proximity to a projected or actual flight path. Some obstacle detection and avoidance systems may further facilitate adjustment or modification of the aircraft trajectory or pilot input to prevent contact with or collision with detected objects. Detected objects may include terrain features, structures, other aircraft, or airborne objects located along or near the flight path. Once an object is detected, a conventional flight control system may automatically activate an autopilot function that assumes direct control of the aircraft.

Instead of assuming automatic control, the flight control system described herein may provide tactile feedback to the pilot through one or more active control inceptors upon detection of one or more obstacles. Accordingly, the flight control system disclosed herein may detect one or more objects, detect a flight regime, and generate appropriate tactile feedback signals to communicate the presence of the detected objects and limit movement of the active control inceptors in accordance with a relative location of the detected objects and the flight regime.

As discussed below, the tactile feedback generated by the flight control system may vary depending upon obstacle characteristics, such as obstacle distance, location, size, relative velocity, or trajectory relative to the aircraft, as well as based on the detected flight regime. Tactile feedback may include, for example, variations in force, resistance, vibration, or position of active control inceptors corresponding to pilot inputs for controlling pitch, roll, yaw, or other aircraft control parameters. Thus, the tactile feedback may assist in modifying pilot inputs to prevent accidental maneuvering with respect to detected obstacles while allowing the pilot to maintain control authority over aircraft operation.

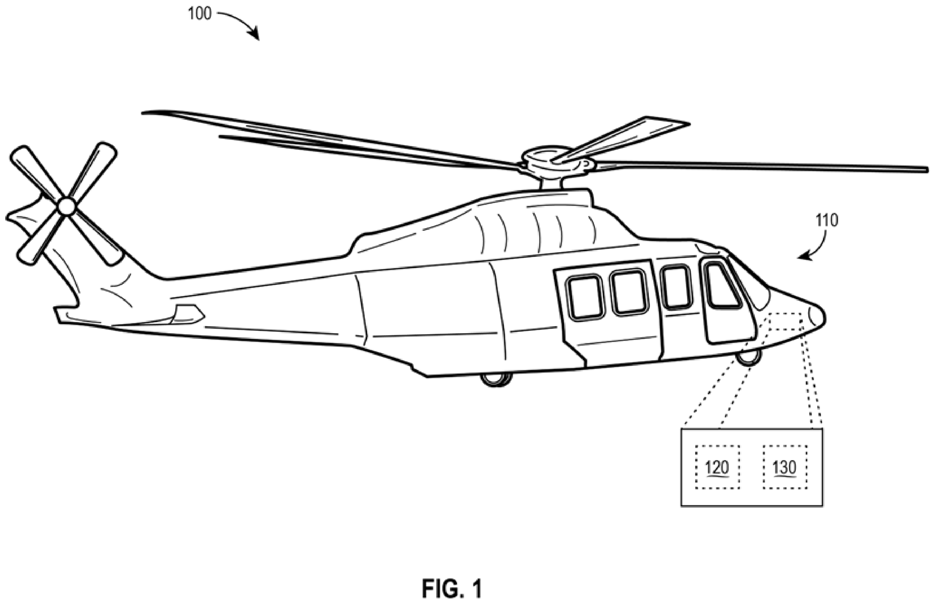

Fig. 1 is a diagram of an example 100 associated with an aircraft 110. As shown in Fig. 1, an aircraft 110 (shown as a helicopter) includes a flight management system 120 and a sensor system 130. When the aircraft 110 is a helicopter, the aircraft 110 may be configured for vertical takeoff, vertical landing, hovering flight, and forward flight. The aircraft 110 includes a main rotor assembly positioned atop a fuselage, which may generate lift and control vertical, forward, backward, and lateral movement. The aircraft 110 may further include a tail rotor assembly positioned at an aft end portion of the fuselage, which may provide anti-torque forces to counteract torque generated by rotation of the main rotor assembly and enable yaw control. The aircraft 110 may further include landing gear assemblies arranged to support the fuselage when the aircraft 110 is stationary or during ground operations.

The aircraft 110 further includes a flight management system 120. The flight management system 120 may include computing hardware and software configured to manage, monitor, and control operation of aircraft 110. The flight management system 120 receives data signals from various onboard sensors and input devices, performs calculations or algorithms based on the received data signals, and provides command outputs to various actuators or control surfaces associated with flight control mechanisms. The flight management system 120 may further provide navigation, autopilot functions, and flight path determination, and may manage communications with external systems, ground stations, or other aircraft.

For example, as discussed in greater detail below, the flight management system includes one or more active control inceptors. The term "active control inceptors" may refer to one or more pilot-operated input devices configured to provide tactile feedback or force cues corresponding to aircraft flight conditions or aircraft control states. The active control inceptors may include sidesticks, center sticks, cyclic sticks, pedals, collective levers, or other pilot-manipulable control devices incorporating force-feedback mechanisms, such as actuators or motors, among other examples. Each active control inceptor may be associated with specific axes of aircraft control. For example, a sidestick or cyclic stick configured as an active control inceptor may provide input and corresponding tactile feedback associated with pitch and roll control of the aircraft 110. Active pedals configured as active control inceptors may provide input and corresponding tactile feedback associated with yaw control. A collective lever configured as an active control inceptor may provide input and corresponding tactile feedback related to vertical movement control, such as climb and descent rates. Active control inceptors may be operatively coupled to the flight management system 120 and may be configured to dynamically modify feedback characteristics based on real-time flight data or a detected flight regime, as discussed in greater detail below.

The sensor system 130 is in communication with the flight management system 120. The sensor system 130 includes one or more sensing devices or sensor arrays configured to monitor operational parameters or environmental conditions associated with the aircraft 110. The sensor system 130 may include inertial measurement units, accelerometers, gyroscopes, altimeters, global navigation satellite system (GNSS) receivers, airspeed sensors, attitude sensors, radar systems, lidar systems, optical cameras, or other types of sensing devices configured to provide signals indicative of aircraft state, position, orientation, velocity, or surrounding conditions. For example, as discussed below, the sensor system 130 may be configured to detect one or more objects, a relative location of each of the one or more objects, or a combination thereof, among other examples. The sensor system 130 transmits collected data signals to one or more components of the flight management system 120, which may allow the flight management system 120 to assess and control operation of the aircraft 110.

For example, the sensor system 130 and flight management system 120 operate to detect an aircraft flight regime, detect one or more objects in or near a flight path during a flight, and apply one or more force cues to one or more active control inceptors in accordance with the aircraft flight regime and a relative location of each of the one or more objects. The flight management system 120 outputs, to at least one of the one or more active control inceptors, a control signal in accordance with the one or more force cues. The one or more force cues include one or more of a detent, one or more soft stop limits, or one or more hard stop limits. The force cues may allow a pilot to remain in control of the aircraft 110 while preventing the pilot from providing a pilot input that may cause the aircraft 110 to move toward, and possibly collide with, the one or more detected objects.

As indicated above, Fig. 1 is provided as an example. Other examples may differ from what is described with regard to Fig. 1.

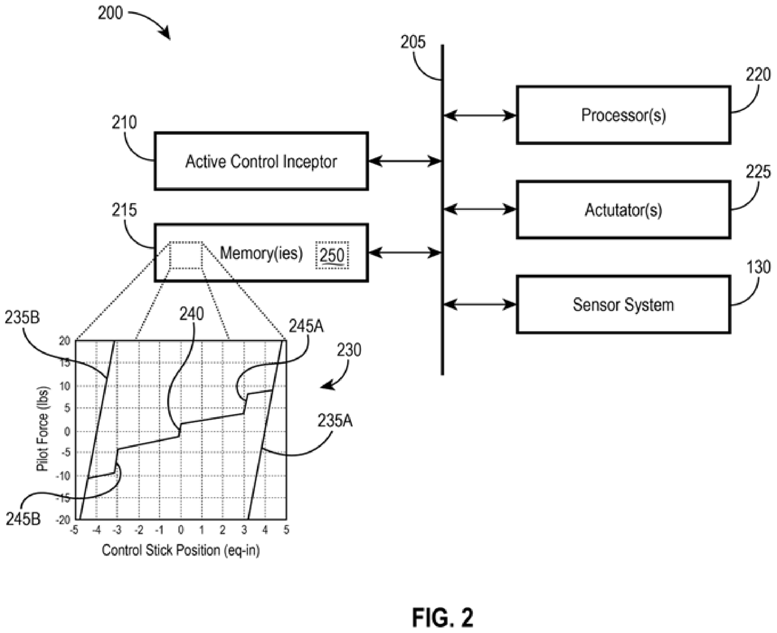

Fig. 2 is a diagram showing example components of a flight control system 200. As shown in Fig. 2, the flight control system 200, which may be included in the flight management system 120 shown in Fig. 1, includes one or more active control inceptors 210, memory 215, one or more processors 220, and one or more actuators 225. Components of the flight control system 200 may be in communication via a bus 205. One or more sensors of the sensor system 130, discussed above with respect to Fig. 1, may also be in communication with the components of the flight control system 200 via the bus 205.

The bus 205 is a communication channel or pathway configured to facilitate transmission and exchange of data, signals, commands, or instructions among various components of the flight control system 200. The bus 205 may support wired or wireless communication protocols.

Each of the one or more active control inceptors 210 may be operatively coupled to bus 205. Each of the active control inceptors 210 is a pilot-operated control device configured to receive manual inputs (e.g., pilot inputs) and provide tactile or haptic feedback in accordance with one or more control signals output by the processor 220, as discussed below. The active control inceptors 210 may be a sidestick, cyclic stick, pedal, or collective lever, among other examples. Each of the active control inceptors 210 includes one or more integrated sensors configured to detect pilot inputs or positional data corresponding to flight control movements or adjustments initiated by the pilot. The detected pilot inputs or positional data may be transmitted via the bus 205 to other components of the flight control system 200.

The memory 215 includes one or more data storage devices configured to store operational data, software instructions, control algorithms, parameter values, flight data, a local area map (e.g., local area map 250), or other data associated with operating the flight control system 200. The memory 215 may include non-volatile memory, volatile memory, read-only memory, random-access memory, flash memory, or other data storage technologies. The memory 215 may store software or logic instructions executable by one or more components of the flight control system 200, such as the processors 220, to facilitate data processing, system control, and generation of tactile feedback commands or other output signals.

The local area map 250, which may be stored in the memory 215 and retrieved from the memory 215 via the bus 205, includes geospatial or environmental data representing aircraft surroundings, terrain features, obstacles, structures, or other relevant environmental objects or hazards located along a projected or actual flight path. The local area map 250 may be dynamically updated or periodically refreshed in accordance with real-time data collected by one or more sensors of the sensor system 130, external data sources communicated via bus 205 (e.g., via a cloud-based computing system and wireless communication protocol), or a combination thereof, among other examples.

The processors 220 include one or more data processing units, microprocessors, digital signal processors, application-specific integrated circuits (ASICs), field-programmable gate arrays (FPGAs), or other data processing components configured to perform computational functions. The processors 220 are individually or collectively configured to execute software or logic instructions retrieved from the memory 215, receive input signals or data from the one or more active control inceptors 210 or other components of the flight control system 200 via bus 205, and generate output signals, commands, or instructions for system operation. The processors 220 are configured to analyze received input data to determine appropriate tactile feedback characteristics or constraints to apply to the active control inceptor 210 in accordance with operational conditions, flight regime information, or obstacle detection data, as discussed below.

The actuators 225 include one or more electromechanical devices configured to interface with one or more components of the flight control system 200, such as one or more of the active control inceptors 210. The actuators 225 are configured to apply a mechanical force, resistance, vibration, or displacement to one or more of the active control inceptors 210 to generate tactile or haptic feedback to the pilot of the aircraft (e.g., the aircraft 110), including applying a force that prevents a pilot input. The actuators 225 may be implemented via electric motors, servomotors, or electromagnetic actuators, among other examples. The actuators 225 are configured to generate tactile or haptic feedback in accordance with one or more control signals received via the bus 205. In some aspects, one or more actuators 225 are incorporated into each of the active control inceptors 210.

The tactile or haptic feedback applied by the actuators 225 to the active control inceptors 210 is applied, at least in part, in accordance with one or more force cues 230 stored in the memory 215. The force cues 230 define one or more operational boundaries or thresholds in which tactile feedback is provided to the pilot via the one or more active control inceptors 210. The force cues 230 include data or parameters stored in the memory 215 and used by the processors 220 to specify a magnitude, direction, and type of tactile feedback or force feedback to be applied by actuators 225. The force cues 230 may include hard stop limits 235, detent 240, and soft stop limits 245. The hard stop limits 235 may define a range of values (shown as hard stop limits 235A and 235B in Fig. 2) of maximum allowable movement or positional limits for one or more of the active control inceptors 210 beyond which further movement is physically prevented by the actuators 225. The hard stop limits 235 may correspond to conditions requiring prevention of particular pilot inputs based upon obstacle proximity or flight regime constraints. The detent 240 may define a specific intermediate positional feedback boundary indicating a preferred or recommended control position to the pilot. The soft stop limits 245 may define positional boundaries at which the actuators 225 may provide gradual or increasing tactile resistance or force feedback without physically restricting further movement of active control inceptor 210. The soft stop limits 245 may be defined in accordance with a range of values (shown as soft stop limits 245A and 245B) associated with the positions of the one or more active control inceptors 210 in which tactile resistance or force feedback opposing a pilot input may increase.

As shown in Fig. 2, one or more of the force cues 230 may be defined in accordance with a pilot input force and a control stick position. For example, control signals that implement the soft stop limits 245 may cause one or more of the active control inceptors 210 (e.g., the control stick) to oppose a pilot input at one or more control stick positions until a pilot input force satisfies a force threshold. The control stick position at which the soft stop limits 245 are applied are associated with one or more of the force cues 230 and a direction and distance of the one or more objects in or near the flight path. If the pilot input force satisfies the force threshold, the control signal may allow the active control inceptor 210 to accept the pilot input by, for example, releasing or reducing the force applied by one or more actuators 225 associated with the active control inceptor 210.

In operation, the processors 220 are configured to detect an aircraft flight regime, detect one or more objects in or near a flight path of the aircraft during a flight, and apply one or more force cues to one or more active control inceptors 210 in accordance with the flight regime and a relative location of each of the one or more detected objects. The one or more processors 220 output, to one or more actuators 225 associated with at least one of the one or more active control inceptors, a control signal in accordance with the one or more force cues 235. The control signal causes at least one of the active control inceptors 210 to apply a detent, one or more soft stop limits, one or more hard stop limits, or a combination thereof, among other examples.

In some aspects, the processors 220 are configured to detect the one or more objects by determining a three-dimensional position of each of the one or more objects in accordance with the local area map 250. Alternatively or in addition, the processors 220 may be configured to detect the one or more objects in accordance with one or more sensor signals output onto the bus 205 by one or more sensors of the sensor system 130. The processors 220 may be configured to determine the one or more force cues 230 in accordance with a direction and distance of each of the one or more objects. The distance and direction of each of the one or more objects may be an absolute distance and direction or a relative distance and direction (e.g., relative to a location of the aircraft).

The processors 220 may be configured to update at least one of the one or more force cues 230 during the flight of the aircraft. For example, when one or more objects are detected, the processors 220 may be configured to set one or more force cues 230 to be applied to one or more of the active control inceptors 210. Alternatively or in addition, the processors 220 may be configured to update at least one of the one or more force cues 230 in accordance with another factor, such as a speed of the aircraft. Accordingly, the processors 220 may be configured to apply a first set of force cues 230 when the aircraft speed satisfies a first threshold, a second set of force cues 230 when the aircraft speed satisfies a second threshold, a third set of force cues 230 when the aircraft speed satisfies a third threshold, or a combination thereof, among other examples. For example, as discussed above, each of the active control inceptors 210 may be associated with a pilot control axis (e.g., yaw, pitch, roll, or thrust, among other examples). The processors 220 may be configured to output one or more control signals to apply a first set of force cues 230 to the active control inceptors 210 for pitch and roll when the aircraft is traveling slower than, for example, 40 knots. The processors 220 may be configured to output one or more control signals to apply a second set of force cues 230 to the active control inceptors 210 for thrust and roll when the aircraft is traveling faster than, for example, 80 knots to help the pilot navigate the aircraft around tall, slender obstacles.

As discussed above, the pilot may overcome the soft stop limits 245 by providing a pilot input force that satisfies a threshold. The pilot may not be able to overcome the hard stop limits 235. For example, regardless of how much force the pilot provides as input to the active control inceptor 210, the control signals provided to one or more actuators 225 associated with the active control inceptor 210 may oppose the pilot input force to prevent the active control inceptor 210 from moving to a position outside the range of the hard stop limits 235. As shown in Fig. 2, the hard stop limits 235 may be a function of a control stick position and a pilot input force.

In some aspects, one or more components of the flight control system 200 may be incorporated into an aircraft having an autopilot capability (e.g., an aircraft configured to perform autonomous or partially autonomous flight operations). In some aspects, the flight control system 200 may be configured to apply one or more of the detent, soft stop limits, hard stop limits, or a combination thereof, among other examples, described herein to the autonomous or partially autonomous flight operations.

As indicated above, Fig. 2 is provided as an example. Other examples may differ from what is described with regard to Fig. 2.

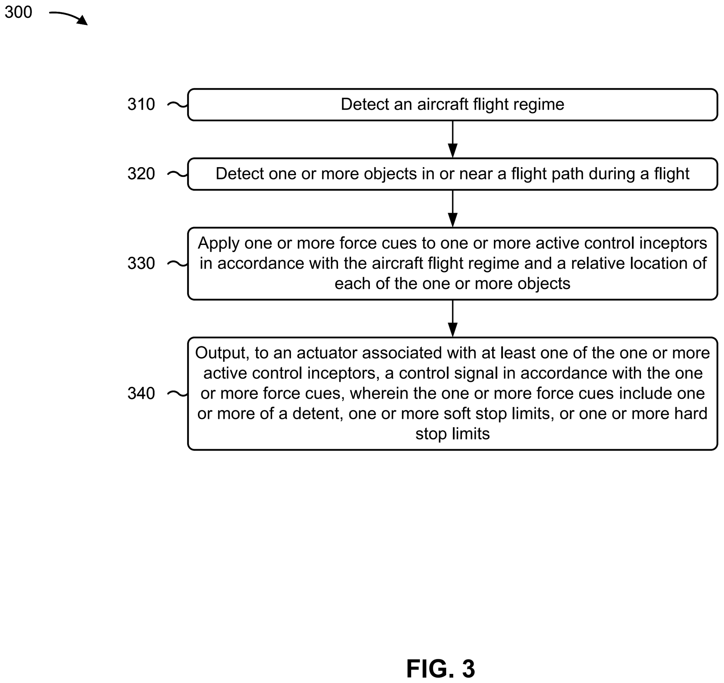

Fig. 3 is a flowchart of an example process 300 associated with modifying flight control force cues. One or more process blocks of Fig. 3 are performed by an aircraft (e.g., aircraft 110) and/or by another device or a group of devices separate from, including, or otherwise associated with the aircraft, such as a flight management system (e.g., flight management system 120), a flight control system (e.g., flight control system 200), one or more processors of the flight control system (e.g., processors 220), or a combination thereof, among other examples.

As shown in Fig. 3, process 300 includes detecting an aircraft flight regime (block 310). For example, the aircraft, flight control system, or processors may detect an aircraft flight regime, as described above.

As further shown in Fig. 3, process 300 includes detecting one or more objects in or near a flight path during a flight (block 320). For example, the aircraft, flight control system, or processors may detect one or more objects in or near a flight path during a flight, as described above.

As further shown in Fig. 3, process 300 includes applying one or more force cues to one or more active control inceptors in accordance with the aircraft flight regime and a relative location of each of the one or more objects (block 330). For example, the aircraft, flight control system, or processors may apply one or more force cues to one or more active control inceptors in accordance with the aircraft flight regime and a relative location of each of the one or more objects, as described above.

As further shown in Fig. 3, process 300 includes outputting, to an actuator associated with at least one of the one or more active control inceptors, a control signal in accordance with the one or more force cues, wherein the one or more force cues include one or more of a detent, one or more soft stop limits, or one or more hard stop limits (block 340). For example, the aircraft, flight control system, or processors may output, to an actuator associated with at least one of the one or more active control inceptors, a control signal in accordance with the one or more force cues, wherein the one or more force cues include one or more of a detent, one or more soft stop limits, or one or more hard stop limits, as described above. In some aspects, the one or more force cues include one or more of a detent, one or more soft stop limits, or one or more hard stop limits.

Process 300 may include additional aspects, such as any single aspect or any combination of aspects described below and/or in connection with one or more other processes described elsewhere herein.

In a first aspect, detecting the one or more objects includes determining a three-dimensional position of each of the one or more objects in accordance with a local area map.

In a second aspect, alone or in combination with the first aspect, detecting the one or more objects includes detecting the one or more objects in accordance with one or more sensor signals output by one or more sensors.

In a third aspect, alone or in combination with one or more of the first and second aspects, process 300 includes determining the one or more force cues in accordance with a direction and distance of each of the one or more objects.

In a fourth aspect, alone or in combination with one or more of the first through third aspects, each of the one or more force cues is defined in accordance with a pilot input force and a control stick position.

In a fifth aspect, alone or in combination with one or more of the first through fourth aspects, process 300 includes updating at least one of the one or more force cues during the flight.

In a sixth aspect, alone or in combination with one or more of the first through fifth aspects, the control signal opposes a pilot input at a control stick position until a pilot input force satisfies a force threshold, and the control stick position is associated with at least one of the one or more force cues and a direction and distance of the one or more objects in or near the flight path.

In a seventh aspect, alone or in combination with one or more of the first through sixth aspects, the control signal limits a range of movement of at least one of the one or more active control inceptors in accordance with at least one of the one or more force cues and a direction and distance of the one or more objects in or near the flight path.

In an eighth aspect, alone or in combination with one or more of the first through seventh aspects, each of the one or more active control inceptors is associated with a pilot control axis, and the control signal is output to the actuator associated with at least one of the one or more active control inceptors in accordance with an aircraft speed.

Although Fig. 3 shows example blocks of process 300, in some implementations, process 300 includes additional blocks, fewer blocks, different blocks, or differently arranged blocks than those depicted in Fig. 3. Additionally, or alternatively, two or more of the blocks of process 300 may be performed in parallel.

The foregoing disclosure provides illustration and description, but is not intended to be exhaustive or to limit the implementations described herein to the precise forms that are described. Modifications and variations can be made in light of the above description or may be acquired from practice of the implementations described herein.

As used herein, the term "component" is intended to be broadly construed as hardware, firmware, and/or a combination of hardware and software. It will be apparent that systems and/or methods described herein can be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

The description includes the following clauses:
1. A method, comprising:
   detecting an aircraft flight regime;
   detecting one or more objects in or near a flight path during a flight;
   applying one or more force cues to one or more active control inceptors in accordance with the aircraft flight regime and a relative location of each of the one or more objects; and
   outputting, to an actuator associated with at least one of the one or more active control inceptors, a control signal in accordance with the one or more force cues,
   wherein the one or more force cues include one or more of a detent, one or more soft stop limits, or one or more hard stop limits.
2. The method of clause 1, wherein detecting the one or more objects includes determining a three-dimensional position of each of the one or more objects in accordance with a local area map.
3. The method of clause 1 or clause 2, wherein detecting the one or more objects includes detecting the one or more objects in accordance with one or more sensor signals.
4. The method of any preceding clause, further comprising determining the one or more force cues in accordance with a direction and distance of each of the one or more objects.
5. The method of any preceding clause, wherein each of the one or more force cues is defined in accordance with a pilot input force and a control stick position.
6. The method of any preceding clause, further comprising updating at least one of the one or more force cues during the flight.
7. The method of any preceding clause, wherein the control signal opposes a pilot input at a control stick position until a pilot input force satisfies a force threshold, and
   wherein the control stick position is associated with at least one of the one or more force cues and a direction and distance of the one or more objects in or near the flight path.
8. The method of any preceding clause, wherein the control signal limits a range of movement of at least one of the one or more active control inceptors in accordance with at least one of the one or more force cues and a direction and distance of the one or more objects in or near the flight path.
9. A flight control system, comprising:
   one or more memories; and
   one or more processors, coupled to the one or more memories, configured to:
      detect an aircraft flight regime;
      detect one or more objects in or near a flight path during a flight;
      apply one or more force cues to one or more active control inceptors in accordance with the aircraft flight regime and a relative location of the one or more objects; and
      output, to an actuator associated with at least one of the one or more active control inceptors, a control signal in accordance with the one or more force cues,
   wherein the one or more force cues include one or more of a detent, one or more soft stop limits, or one or more hard stop limits.
9a. A flight control system, comprising:
   one or more memories; and
   one or more processors, coupled to the one or more memories, configured to perform the method of any of clauses 1 to 8.
10. The flight control system of clause 9 or clause 9a, wherein the one or more processors, to detect the one or more objects, are configured to determine a three-dimensional position of each of the one or more objects in accordance with a local area map.
11. The flight control system of any of clauses 9 to 10, wherein the one or more processors, to detect the one or more objects, are configured to detect the one or more objects in accordance with one or more sensor signals output by one or more sensors.
12. The flight control system of any of clauses 9 to 11, wherein the one or more processors are further configured to determine the one or more force cues in accordance with a direction and distance of the one or more objects.
13. The flight control system of any of clauses 9 to 12, wherein each of the one or more force cues is defined in accordance with a pilot input force and a control stick position.
14. The flight control system of any of clause 9 to 12, wherein the one or more processors are further configured to update the one or more force cues during the flight.
15. The flight control system of any of clauses 9 to 14, wherein the control signal causes the one or more active control inceptors to oppose a pilot input at a control stick position until a pilot input force satisfies a force threshold, and
   wherein the control stick position is associated with at least one of the one or more force cues and a direction and distance of the one or more objects in or near the flight path.
16. The flight control system of any of clauses 9 to 15, wherein the control signal limits a range of movement of at least one of the one or more active control inceptors in accordance with at least one of the one or more force cues and a direction and distance of the one or more objects in or near the flight path.
17. The flight control system of any of clauses 9 to 16, wherein each of the one or more active control inceptors is associated with a pilot control axis, and
   wherein the control signal is output to the actuator associated with at least one of the one or more active control inceptors in accordance with an aircraft speed.
18. A (optionally non-transitory) computer-readable medium storing a set of instructions, the set of instructions comprising:
   one or more instructions that, when executed by one or more processors of a flight control system, cause the flight control system to:
   detect an aircraft flight regime;
   detect one or more objects in or near a flight path during a flight;
   apply one or more force cues to one or more active control inceptors in accordance with the aircraft flight regime and a relative location of the one or more objects; and
   output, to an actuator associated with at least one of the one or more active control inceptors, a control signal in accordance with the one or more force cues,
   wherein the one or more force cues include one or more of a detent, one or more soft stop limits, or one or more hard stop limits.
18a. A (optionally non-transitory) computer-readable medium storing a set of instructions, the set of instructions comprising:
   one or more instructions that, when executed by one or more processors of a flight control system, cause the flight control system to perform the method of any of clauses 1 to 8.
19. The (optionally non-transitory) computer-readable medium of clause 18 or clause 18a, wherein the one or more instructions, that cause the flight control system to detect the one or more objects, cause the flight control system to determine a three-dimensional position of the one or more objects in accordance with a local area map.
20. The (optionally non-transitory) computer-readable medium of any of clauses 18 to 19, wherein the one or more instructions, that cause the flight control system to detect the one or more objects, cause the flight control system to detect the one or more objects in accordance with one or more sensor signals.

## Claims

1. A method, comprising:
detecting an aircraft flight regime;
detecting one or more objects in or near a flight path during a flight;
applying one or more force cues (230) to one or more active control inceptors (210) in accordance with the aircraft flight regime and a relative location of each of the one or more objects; and
outputting, to an actuator associated with at least one of the one or more active control inceptors (210), a control signal in accordance with the one or more force cues (230),
wherein the one or more force cues (230) include one or more of a detent (240), one or more soft stop limits (245A, 245B), or one or more hard stop limits (235A, 235B).

2. The method of claim 1, wherein detecting the one or more objects includes determining a three-dimensional position of each of the one or more objects in accordance with a local area map (250).

3. The method of claim 1 or claim 2, wherein detecting the one or more objects includes detecting the one or more objects in accordance with one or more sensor signals.

4. The method of any preceding claim, further comprising determining the one or more force cues (230) in accordance with a direction and distance of each of the one or more objects.

5. The method of any preceding claim, wherein each of the one or more force cues (230) is defined in accordance with a pilot input force and a control stick position.

6. The method of any preceding claim, further comprising updating at least one of the one or more force cues (230) during the flight.

7. The method of any preceding claim, wherein the control signal opposes a pilot input at a control stick position until a pilot input force satisfies a force threshold, and
wherein the control stick position is associated with at least one of the one or more force cues (230) and a direction and distance of the one or more objects in or near the flight path.

8. The method of any preceding claim, wherein the control signal limits a range of movement of at least one of the one or more active control inceptors (210) in accordance with at least one of the one or more force cues (230) and a direction and distance of the one or more objects in or near the flight path.

9. A flight control system (200), comprising:
one or more memories (215); and
one or more processors (220), coupled to the one or more memories (215), configured to:
detect an aircraft flight regime;
detect one or more objects in or near a flight path during a flight;
apply one or more force cues (230) to one or more active control inceptors (210) in accordance with the aircraft flight regime and a relative location of the one or more objects; and
output, to an actuator associated with at least one of the one or more active control inceptors (210), a control signal in accordance with the one or more force cues (230),
wherein the one or more force cues (230) include one or more of a detent (240), one or more soft stop limits (245A, 245B), or one or more hard stop limits (235A, 235B).

10. The flight control system (200) of claim 9, wherein the one or more processors (220), to detect the one or more objects, are configured to determine a three-dimensional position of each of the one or more objects in accordance with a local area map (250), and/or, wherein the one or more processors (220), to detect the one or more objects, are configured to detect the one or more objects in accordance with one or more sensor signals output by one or more sensors (130), and/or, wherein the one or more processors (220) are further configured to determine the one or more force cues (230) in accordance with a direction and distance of the one or more objects, and/or, wherein each of the one or more force cues (230) is defined in accordance with a pilot input force and a control stick position.

11. The flight control system (200) of claim 9 or claim 10, wherein the one or more processors (220) are further configured to update the one or more force cues (230) during the flight.

12. The flight control system (200) of any of claims 9 to 11, wherein the control signal causes the one or more active control inceptors (210) to oppose a pilot input at a control stick position until a pilot input force satisfies a force threshold, and
wherein the control stick position is associated with at least one of the one or more force cues (230) and a direction and distance of the one or more objects in or near the flight path.

13. The flight control system (200) of any of claims 9 to 12, wherein the control signal limits a range of movement of at least one of the one or more active control inceptors (210) in accordance with at least one of the one or more force cues (230) and a direction and distance of the one or more objects in or near the flight path,, wherein each of the one or more active control inceptors (210) is associated with a pilot control axis, and
wherein the control signal is output to the actuator associated with at least one of the one or more active control inceptors (210) in accordance with an aircraft speed.

14. A computer-readable medium storing a set of instructions, the set of instructions comprising:
one or more instructions that, when executed by one or more processors (220) of a flight control system (200), cause the flight control system (200) to:
detect an aircraft flight regime;
detect one or more objects in or near a flight path during a flight;
apply one or more force cues (230) to one or more active control inceptors (210) in accordance with the aircraft flight regime and a relative location of the one or more objects; and
output, to an actuator associated with at least one of the one or more active control inceptors (210), a control signal in accordance with the one or more force cues (230),
wherein the one or more force cues (230) include one or more of a detent (240), one or more soft stop limits (245A, 245B), or one or more hard stop limits (235A, 235B).

15. The computer-readable medium of claim 14, wherein the one or more instructions, that cause the flight control system (200) to detect the one or more objects, cause the flight control system (200) to determine a three-dimensional position of the one or more objects in accordance with a local area map (250), and/or, wherein the one or more instructions, that cause the flight control system (200) to detect the one or more objects, cause the flight control system (200) to detect the one or more objects in accordance with one or more sensor signals.
